# EUROPÄISCHE PATENTSCHRIFT

(11) **EP 3 403 762 B1**
(45) Veröffentlichungstag und Bekanntmachung des Hinweises auf die Patenterteilung: **13.09.2023**
(21) Anmeldenummer: 17171966.9
(22) Anmeldetag: 19.05.2017
(51) Int. Cl.: B23Q 11/00

(54) **WERKZEUGMASCHINE MIT SICHERHEITSSYSTEM**
MACHINE TOOL WITH SAFETY SYSTEM
MACHINE-OUTIL AVEC SYSTÈME DE SÉCURITÉ

(43) Veröffentlichungstag der Anmeldung: 21.11.2018
(73) Patentinhaber: Felder KG, 6060 Hall in Tirol (AT); Technische Universität Wien, 1040 Wien (AT)
(72) Erfinder: WEILER, Thomas, 1050 Wien (AT); CAUDR, Helmut, 1210 Wien (AT); BLEICHER, Friedrich, 1140 Wien (AT)
(74) Vertreter: Torggler & Hofmann Patentanwälte - Innsbruck

(56) Entgegenhaltungen:
- EP-A1- 2 708 302
- US-A1- 2002 020 265
- US-A1- 2004 159 198

## Beschreibung

Die Erfindung betrifft eine Werkzeugmaschine mit einem Sicherheitssystem mit den Merkmalen des Oberbegriffs des Anspruchs 1 und ein Verfahren zum Betrieb einer solchen Werkzeugmaschine.

Im handwerklichen Bereich ist der Einsatz von Werkzeugmaschinen mit Werkzeugen allgemein bekannt. Dabei ist speziell im holzverarbeitenden Handwerk der Einsatz von Werkzeugmaschinen in Form von Formatkreissägen weit verbreitet. Hersteller solcher Werkzeugmaschinen sind laufend mit der Entwicklung von Sicherheitssystemen für Werkzeugmaschinen befasst. Trotzdem passieren immer wieder Unfälle, die schwerste Verletzungen verursachen. Bei Werkzeugmaschinen, beispielsweise bei Kreissägemaschinen, geht die Gefährdung prinzipiell immer vom Werkzeug, beim Beispiel der Kreissägemaschinen von einem rotierenden Werkzeug in Form eines Kreissägeblatts, aus. Durch den beim Betrieb einer Werkzeugmaschine nötigen Kontakt eines Benutzers zu den oftmals handgeführten Werkstücken kann das Werkzeug in der Praxis nie komplett durch eine mechanische Schutzeinrichtung von dem Benutzer isoliert werden. Unachtsamkeit, Demontage oder falsche Anwendung von Schutzeinrichtungen bzw. Sicherheitssystemen erhöhen ebenfalls das Verletzungsrisiko.

Die EP 2 708 302 A1 zeigt eine Sägeeinrichtung mit einer an einem bewegbaren Träger gelagerten Spindel. Durch das Vorsehen einer Führungseinrichtung soll eine vibrationsarme und präzise Lagerung der Spindel erreicht werden. Es kann eine magnetische, elektromagnetische, elektrostatische oder andere Arretiereinrichtung zur Arretierung des Trägers in zumindest einer Stellung vorgesehen sein.

Die US 2004/159198 A1 zeigt eine Tischkreissäge mit einem durch ein Absenksystem absenkbaren Sägeblatt, wobei das Sägeblatt an einem Schwenkarm gelagert ist. Ein Verschwenken des Schwenkarms kann durch einen Aktuator 180 erfolgen, welcher als Hubmagnet ("solenoid with plunger") ausgebildet sein kann.

Die US 2002/020265 A1 zeigt eine Holzbearbeitungsmaschine mit einem Werkzeug in Form beispielsweise eines Sägeblatts, wobei das Werkzeug bei einer Gefahrensituation abgesenkt werden kann und die Rückstellung des Werkzeug durch eine Hemmvorrichtung mit einem Elektromagnet verhindert werden kann.

Aufgabe der Erfindung ist es, eine verbesserte Werkzeugmaschine mit einem Sicherheitssystem und ein verbessertes Verfahren zum Betrieb einer solchen Werkzeugmaschine anzugeben.

Diese Aufgabe wird durch eine Werkzeugmaschine mit den Merkmalen des Anspruchs 1 und einem Verfahren zum Betrieb einer Werkzeugmaschine gemäß Anspruch 20 gelöst.

Vorteilhafte Ausführungsformen der Erfindung sind in den abhängigen Ansprüchen definiert.

Wie bei einem gattungsgemäßen Sicherheitssystem kann ein erfindungsgemäßes Sicherheitssystem, welches für eine Werkzeugmaschine mit einem Werkzeug ausgebildet ist, zunächst eine an einem Rahmen der Werkzeugmaschine bewegbar angeordnete Aufspannvorrichtung für das Werkzeug aufweisen. Die Aufspannvorrichtung, und damit auch das Werkzeug, kann durch eine Bewegungsvorrichtung aus einer Arbeitsstellung, in welcher das Werkzeug zum Arbeiten verwendbar ist und für einen Benutzer eine Verletzungsgefahr durch das Werkzeug besteht, in eine Sicherheitsstellung bewegbar sein, in welcher für den Benutzer im Wesentlichen keine Verletzungsgefahr durch das Werkzeug besteht.

Im Gegensatz zu im Stand der Technik bekannten Sicherheitssystemen weist die Bewegungsvorrichtung des erfindungsgemäßen Sicherheitssystems zumindest zwei gleich oder entgegengesetzt magnetisierte und/oder magnetisierbare magnetische Mittel auf, von denen zumindest ein erstes magnetisches Mittel mit dem Werkzeug verbunden ist und zumindest ein zweites magnetisches Mittel mit dem Rahmen verbunden oder an diesem angeordnet ist, sodass die Bewegung des Werkzeugs durch die Bewegungsvorrichtung aus der Arbeitsstellung in die Sicherheitsstellung mittels magnetischer Kraft auslösbar und/oder zumindest teilweise durchführbar ist.

Als Sicherheitssystem für eine Werkzeugmaschine kann allgemein eine Anordnung aus verschiedenen Vorrichtungen verstanden werden, durch deren Zusammenwirken die Sicherheit der Bedienung der Werkzeugmaschine erhöht werden kann. Als eine Werkzeugmaschine kann allgemein eine Vorrichtung verstanden werden, mittels welcher eine geführte Bewegung eines Werkzeugs, beispielsweise eine gegebenenfalls periodische Linearbewegung und/oder Rotationsbewegung des Werkzeugs, durchgeführt werden kann. Als ein Werkzeug kann allgemein eine Vorrichtung zur Manipulation und/oder Bearbeitung eines Werkstücks verstanden werden, wobei das Werkzeug beispielsweise als ein spanabhebendes Werkzeug mit zumindest einer Werkzeugschneide ausgebildet sein kann. Als ein Rahmen der Werkzeugmaschine kann allgemein eine Tragkonstruktion für einzelne Teile der Werkzeugmaschine verstanden werden. Als eine Aufspannvorrichtung für das Werkzeug kann allgemein eine Vorrichtung zum Einspannen bzw. zur Montage eines Werkzeugs in bzw. an der Werkzeugmaschine verstanden werden, wobei die Aufspannvorrichtung Teil einer Vorrichtung zur Durchführung der geführten Bewegung des Werkzeugs, beispielsweise Teil eines Antriebs oder speziell eines Sägeaggregats, sein kann. Als eine Bewegungsvorrichtung kann allgemein eine Vorrichtung zur Bewegung des Werkzeugs zusätzlich zu jener der Manipulation und/oder Bearbeitung eines Werkstücks dienenden Bewegung verstanden werden. Die Bewegung des Werkzeugs durch die Bewegungsvorrichtung kann im Wesentlichen unabhängig von der Bewegung des Werkzeugs zur Manipulation und/oder Bearbeitung eines Werkstücks erfolgen. Als eine Arbeitsstellung kann allgemein eine Stellung des Werkzeugs verstanden werden, in welcher das Werkzeug im Wesentlichen unmittelbar mit dem zu manipulieren und/oder bearbeitenden Werkstück in Eingriff gebracht werden kann. Für einen Benutzer besteht in einer Arbeitsstellung des Werkzeugs eine Verletzungsgefahr durch das Werkzeug, da es für diesen somit auch zu einem Eingriff in das Werkzeug kommen kann. Analog dazu kann allgemein als eine Sicherheitsstellung des Werkzeugs eine Stellung verstanden werden, in welcher für den Benutzer im Allgemeinen kein unmittelbarer Eingriff in das Werkzeug möglich ist und somit im Wesentlichen keine Verletzungsgefahr durch das Werkzeug besteht.

Als magnetisches Mittel kann allgemein ein magnetischer bzw. permanentmagnetischer oder zumindest vorübergehend magnetisierbarer Stoff verstanden werden. Ein solcher zumindest vorübergehend magnetisierbarer Stoff kann beispielsweise in Form eines halbharten magnetischen Materials vorliegen. Solche halbharten magnetischen Materialien sind beispielsweise unter der Bezeichnung VACOZET oder CROVAC bekannt. Diese Stoffe können als volle Körper oder, beispielsweise zur Wirbelstromvermeidung, als Blechpaket ausgeführt werden. Die Fertigung aus Sinterwerkstoffen ist ebenfalls denkbar.

Die magnetischen Mittel können gleich oder entgegengesetzt magnetisiert und/oder magnetisierbar sein und sich somit magnetisch abstoßen oder anziehen. Durch eine Magnetisierung der magnetischen Mittel kann also eine abstoßende oder anziehende Kraft zwischen den magnetischen Mitteln wirken bzw. hervorgerufen werden.

Grundsätzlich sind zumindest fünf Ausführungen der zumindest zwei magnetischen Mittel denkbar. So können die zumindest zwei magnetischen Mittel zumindest durch folgende Kombinationen ausgeführt sein:
- Permanentmagnet und ferromagnetischer Stoff
- Elektromagnet (gegebenenfalls mit einem Kern) und ferromagnetischer Stoff
- Permanentmagnet und Elektromagnet (gegebenenfalls mit einem Kern)
- Elektromagnet und Elektromagnet (gegebenenfalls jeweils mit einem Kern)
- Elektromagnet mit Permanentmagnet und Elektromagnet

Ein erstes magnetisches Mittel kann dabei mit dem Werkzeug verbunden sein, sodass eine auf das erste magnetische Mittel wirkende Kraft auf das Werkzeug bzw. die Aufspannvorrichtung für das Werkzeug übertragen werden kann. Die Angabe, dass das erste magnetische Mittel mit dem Werkzeug verbunden ist, bedeutet, dass das zumindest eine erste magnetische Mittel entweder unmittelbar oder mittelbar, zum Beispiel über die Aufspannvorrichtung, mit dem Werkzeug verbunden ist. Ein zweites magnetisches Mittel kann mit dem Rahmen verbunden oder an diesem angeordnet sein, sodass eine auf das zweite magnetische Mittel wirkende Kraft auf den Rahmen der Werkzeugmaschine übertragen werden kann.

Durch die Anordnung und das entsprechende Zusammenwirken der zumindest zwei magnetischen Mittel kann die Bewegung des Werkzeugs durch die Bewegungsvorrichtung aus der Arbeitsstellung in die Sicherheitsstellung mittels magnetischer Kraft auslösbar und/oder zumindest teilweise durchführbar sein. So kann die Bewegung aus der Arbeitsstellung in die Sicherheitsstellung mittels einer zwischen den zumindest zwei magnetischen Mitteln wirkenden Kraft initiiert werden, sodass sich das Werkzeug zunächst aus der Arbeitsstellung in Richtung der Sicherheitsstellung zu bewegen beginnt. Die ausgelöste Bewegung kann durch eine andauernde Wirkung der zwischen den zumindest zwei magnetischen Mitteln wirkenden Kraft weitergeführt werden. Alternativ oder auch unterstützend zu einer weiter andauernden magnetischen Kraft kann die Bewegung durch eine zusätzliche Kraft, beispielsweise aus einem Kraftspeicher in Form etwa einer Feder oder bei entsprechender Anordnung des Werkzeugs in der Werkzeugmaschine auch durch Gravitationskraft, weitergeführt werden. Eine Auslösung und/oder zumindest teilweise Durchführung der Bewegung kann beispielsweise durch Abschalten, Kompensieren oder Aufbringen einer zwischen den zumindest zwei magnetischen Mitteln wirkenden, anziehenden oder abstoßenden magnetischen Kraft erfolgen. Die auftretende magnetische Kraft kann beispielsweise - je nach Ausführung der Werkzeugmaschine - im Bereich von mehreren Kilo-Newton liegen. Bevorzugt ist ein Bereich von 40 bis 4000 N oder mehr.

Die Angabe, dass die Bewegung des Werkzeugs durch die Bewegungsvorrichtung aus der Arbeitsstellung in die Sicherheitsstellung mittels magnetischer Kraft auslösbar ist, bedeutet, dass zumindest in der Anfangsphase der Bewegung auf das Werkzeug bzw. die Aufspannvorrichtung zumindest eine magnetische Kraft wirkt. Das Wirken zusätzlicher Kräfte, beispielsweise einer Gewichtskraft, ist dabei nicht ausgeschlossen.

Die Angabe, dass die Bewegung des Werkzeugs durch die Bewegungsvorrichtung aus der Arbeitsstellung in die Sicherheitsstellung mittels magnetischer Kraft zumindest teilweise durchführbar ist, bedeutet, dass während zumindest eines Teils der Bewegung zumindest eine magnetische Kraft wirkt. Das Wirken zusätzlicher Kräfte, beispielsweise einer Gewichtskraft, ist dabei nicht ausgeschlossen.

Die magnetische Kraft kann dabei beispielsweise über eine Dauer von 1 Sekunde bis 500 ms oder weniger, vorzugsweise 500 ms bis 100 ms oder weniger, besonders vorzugsweise 100 ms bis 50 ms oder weniger, wirken.

Ein Auslösen und/oder zumindest teilweises Durchführen der Bewegung durch eine magnetische Kraft hat den Vorteil, dass dies verschleiß- und zerstörungsfrei erfolgen kann.

Weiter kann ein Auslösen und/oder zumindest teilweises Durchführen der Bewegung durch eine magnetische Kraft sehr schnelle Auslösezeiten (sehr niedrige Latenzzeiten), also beispielsweise sehr schnelles An- bzw. Abschalten der magnetischen Kraft, erlauben.

Dabei kann vorteilhaft sein, dass die Bewegungsvorrichtung eine Haltevorrichtung aufweist, durch welche das Werkzeug durch eine Haltekraft in der Arbeitsstellung gehalten wird. So kann durch das Werkzeug zur Manipulation und/oder Bearbeitung eines Werkstücks eine Kraft aufgebracht bzw. aufgenommen werden, ohne dass das Werkzeug dadurch unbeabsichtigt aus der Arbeitsstellung heraus bewegt wird. Die Haltekraft kann dabei auf die Aufspannvorrichtung für das Werkzeug wirken. Die aufgebrachte Haltekraft kann beispielsweise - je nach Ausführung der Werkzeugmaschine - im Bereich von mehreren Kilo-Newton liegen. Bevorzugt ist ein Bereich von 40 bis 4000 N oder mehr.

Die Haltekraft kann dabei zumindest teilweise über einen Formschluss und/oder zumindest teilweise über einen Kraftschluss und/oder zumindest teilweise von zumindest einem der magnetischen Mittel aufgebracht werden. Die zumindest teilweise über einen Formschluss aufgebrachte Haltekraft kann beispielsweise über eine Schnappverbindung, etwa zwischen der Aufspannvorrichtung für das Werkzeug und dem Rahmen der Werkzeugmaschine, aufgebracht werden. Die zumindest teilweise über einen Kraftschluss aufgebrachte Haltekraft kann beispielsweise über eine Klemmverbindung, etwa zwischen der Aufspannvorrichtung für das Werkzeug und dem Rahmen der Werkzeugmaschine, aufgebracht werden. Die Haltekraft kann jedoch auch zumindest teilweise von zumindest einem der magnetischen Mittel, beispielsweise von einem bestromten Elektromagnet, einem magnetisierten magnetisch halbharten Werkstoff oder einem Permanentmagnet, aufgebracht werden. Vorteilhafterweise kann die Haltekraft bei einer Auslösung und/oder zumindest teilweisen Durchführung der Bewegung zerstörungsfrei überwunden werden.

Weiter kann dabei von Vorteil sein, dass die Haltekraft zur Auslösung der Bewegung des Werkzeugs durch die Bewegungsvorrichtung aus der Arbeitsstellung in die Sicherheitsstellung mittels zumindest eines der magnetischen Mittel magnetisch überwindbar ist. Dabei kann das zur Überwindung der Haltekraft dienende magnetische Mittel das die Haltekraft aufbringende magnetische Mittel sein oder es kann sich dabei um ein zusätzliches magnetisches Mittel handeln.

Es kann grundsätzlich von Vorteil sein, dass die Bewegungsvorrichtung eine Führung zur Bewegung des Werkzeugs durch die Bewegungsvorrichtung aufweist, wobei die Führung vorzugsweise in Form einer Linearführung ausgebildet ist. Eine solche Führung kann eine geführte Bewegung des Werkzeugs bzw. der Aufspannvorrichtung aus der Arbeitsstellung in die Sicherheitsstellung erlauben. Dadurch kann sich ein vorbestimmbarer Ablauf der Bewegung ermöglichen lassen. Die Führung kann in Form einer Linearführung, also in Form einer Führung, bei welcher das Werkzeug bzw. die Aufspannvorrichtung für das Werkzeug entlang einer im Wesentlichen geraden Verbindungslinie zwischen der Arbeitsstellung und der Sicherheitsstellung bewegt wird, ausgeführt sein. Das Werkzeug bzw. die Aufspannvorrichtung für das Werkzeug kann dabei linear verschiebbar am Rahmen der Werkzeugmaschine gelagert sein. Alternativ dazu kann die Führung in Form einer Schwenkvorrichtung ausgebildet sein, bei welcher beispielsweise das Werkzeug bzw. die Aufspannvorrichtung für das Werkzeug um eine Schwenkachse schwenkbar am Rahmen der Werkzeugmaschine gelagert sein kann.

Es kann vorteilhaft sein, dass die magnetischen Mittel zumindest einen Permanentmagnet umfassen. Durch einen solchen Permanentmagnet kann beispielsweise die Haltekraft, durch welche das Werkzeug bzw. die Aufspannvorrichtung in der Arbeitsstellung gehalten wird, aufgebracht werden. Es ist auch denkbar, dass ein magnetisch halbhartes Material, welches durch seine Remanenz-Magnetisierung die Aufgabe eines Permanentmagneten erfüllen kann, eingesetzt wird.

Es kann vorteilhaft sein, dass die magnetischen Mittel zumindest einen magnetisierbaren Stoff, vorzugsweise einen ferromagnetischen Stoff, umfassen. Der ferromagnetische Stoff kann beispielsweise einen Kern einer Spule eines Elektromagneten ausbilden. Die magnetischen Mittel können auch einen weichmagnetischen Stoff umfassen.

Es kann vorteilhaft sein, dass die magnetischen Mittel zumindest einen Elektromagnet, vorzugsweise zumindest zwei Elektromagnete, umfassen. Das als Elektromagnet ausgebildete magnetische Mittel bzw. die als Elektromagnet ausgebildeten magnetischen Mittel kann bzw. können zum Aufbringen einer Haltekraft und/oder zur Auslösung und/oder zumindest teilweisen Durchführung der Bewegung des Werkzeugs aus der Arbeitsstellung in die Sicherheitsstellung dienen.

Dabei kann vorteilhaft sein, dass der zumindest eine Elektromagnet in Form einer Spule mit einem magnetisierbaren Kern ausgebildet ist. Der Kern bzw. ein Teil des Kerns kann dabei auch zu einem gewissen Grad permanent magnetisiert bzw. magnetisierbar sein (Remanenzfeld). Der Kern kann einteilig oder mehrteilig ausgebildet sein. Bei einer besonders vorteilhaften Ausbildung des Kerns kann dieser, gegebenenfalls auch teilweise, einen lamellierten Aufbau aufweisen. Ein solcher lamellierter Aufbau kann beispielsweise in Form eines aus einzelnen Lamellen aufgebauten Blechpakets gegeben sein. Der Kern kann eine rotationssymmetrische Form, beispielsweise in Form eines Torus oder eines Zylinders, aufweisen. Ein prismenförmiger oder quaderförmiger Aufbau ist jedoch auch denkbar. Der Kern bzw. auch Teile des Kerns können aus einem zumindest vorübergehend magnetisierbaren Material (weichmagnetisches, halbhartes oder hartmagnetisches Material) gefertigt sein. Eine Fertigung des Kerns bzw. auch von Teilen des Kerns aus einem magnetisch halbhartem Material kann den Vorteil haben, dass sich - dadurch, dass eine zumindest vorübergehend anhaltende Magnetisierung erst nach einer erstmaligen Magnetisierung vorliegt - die Fertigung, Bearbeitung, Handhabe und der Zusammenbau eines solchen Kerns wesentlich einfacher und sicherer gestaltet, als beispielsweise eines bereits magnetisierten (gegebenenfalls permanentmagnetischen) Kerns.

Dabei kann weiter vorteilhaft sein, dass die magnetischen Mittel zumindest zwei Elektromagnete umfassen, wobei die Spulen der zumindest zwei Elektromagnete in Serie geschaltet sein können und vorzugsweise in Montagelage in der Bewegungsvorrichtung eine gegensätzlich orientierte Windungsrichtung aufweisen können . Durch eine Serien- bzw. Reihenschaltung der Spulen kann sich eine zeitgleiche Aktivierung oder auch Deaktivierung der magnetischen Mittel einfach ermöglichen lassen. Durch eine in Montagelage der Bewegungsvorrichtung gegensätzlich orientierte Windungsrichtung der zwei Spulen der Elektromagnete kann eine abstoßende Kraft zwischen den zwei magnetischen Mitteln bei einer Bestromung der Spulen ermöglicht werden.

Dabei kann vorteilhaft sein, dass der Kern zunächst im Wesentlichen in Form eines Zylinders, eines Prismas oder eines Quaders mit einer Mantelfläche und zwei Stirnflächen ausgebildet ist. Weiter kann der Kern im Wesentlichen konzentrisch zur Spule angeordnet sein. Die Ausformung des Kerns kann derart gestaltet sein, dass zumindest eine der Stirnflächen des Kerns, also zumindest eine der Deckflächen des Zylinders, Prismas oder Quaders, in einem Randbereich Mittel zur Führung des magnetischen Flusses aufweist. Es kann auch vorteilhaft sein, wenn die Spule zumindest teilweise im Kern eingebettet ist.

Bei der Ausformung des Kerns kann es von Vorteil sein, wenn die Mittel zur Führung des magnetischen Flusses in Form von zumindest einem im Wesentlichen ringförmigen Fortsatz an zumindest einer der Stirnflächen des Kerns ausgebildet sind. Bei einer anderen Form des Kerns kann der Fortsatz entsprechend angepasst werden. So können bei beispielsweise einer prismenförmigen oder quaderförmigen Form des Kerns die Mittel zur Führung des magnetischen Flusses eine zumindest abschnittsweise etwa balkenförmige oder stegförmige Form aufweisen. Die Mittel zur Führung des magnetischen Flusses können beispielsweise also im Wesentlichen in Form einer von der Grundform des Kerns axial und/oder radial abstehenden, stegförmigen Struktur ausgebildet sein.

Dabei kann vorteilhaft sein, dass der zumindest eine im Wesentlichen ringförmige oder gegebenenfalls auch balkenförmige Fortsatz einen im wesentlichen trapezförmigen Querschnitt aufweist. Der Fortsatz kann eine sich verjüngende Querschnittsform aufweisen.

Durch solche Mittel zur Führung des magnetischen Flusses, und auch durch eine solche vorteilhafte Querschnittsform, kann sich lokal eine besonders hohe Flussdichte ergeben und somit eine Erhöhung der magnetischen Kraft zwischen den magnetischen Mitteln erreichen lassen.

Es kann grundsätzlich von Vorteil sein, dass die zumindest zwei magnetischen Mittel einander gegenüberliegend, vorzugsweise koaxial einander gegenüberliegend, angeordnet sind. Dadurch kann eine symmetrische Verteilung der zwischen den zwei magnetischen Mitteln wirkenden Kräfte erreicht werden.

Es kann vorteilhaft sein, dass das Sicherheitssystem eine Detektionsvorrichtung zur Erkennung einer Verletzungsgefahr für einen Benutzer durch das Werkzeug aufweist. Die Detektionsvorrichtung kann dazu ausgebildet sein, mittels geeigneter Sensoren eine Annäherung und/oder Kontaktierung eines Benutzers - oder aber auch eines Fremdkörpers in einem Werkstück, wie etwa eines Nagels in einem Stück Holz - zu erkennen.

Eine besonders vorteilhafte Ausführung eines Sicherheitssystems kann sich ergeben, wenn die Auslösung und/oder Durchführung der Bewegung des Werkzeugs durch die Bewegungsvorrichtung in Abhängigkeit einer Erkennung einer Verletzungsgefahr für einen Benutzer durch das Werkzeug erfolgt. Beispielsweise kann nach einer Erkennung durch das erfindungsgemäße Sicherheitssystem eine Auslösung und/oder zumindest teilweise Durchführung der Bewegung bereits nach etwa 1 ms oder weniger, vorzugsweise etwa 500 µs oder weniger, besonders vorzugsweise 200 µs oder weniger, erfolgen. Durch eine solche vorteilhaft kurze Latenzzeit kann somit beispielsweise bei einer Annäherung eines Benutzers an das Werkzeug mit einer Geschwindigkeit von beispielsweise etwa 1 m/s eine Auslösung der Bewegung bei einem Abstand zum Werkzeug von beispielsweise etwa 2 bis 5 mm, vorzugsweise 1 bis 2 mm oder weniger, besonders vorzugsweise 0,5 bis 1 mm oder weniger, erfolgen, und dennoch eine sichere Bewegung des Werkzeugs aus der Arbeitsstellung in die Sicherheitsstellung erfolgen. Fehlauslösungen, wie sie beispielsweise bei im Stand der Technik bekannten Sicherheitssystemen aufgrund deren großer Latenzzeiten und dementsprechend frühe Auslösung gegeben sind, können somit vermieden werden.

Eine solch geringe Latenzzeit im Vergleich zum Stand der Technik ermöglicht eine schnellere Einleitung einer Rückzugsbewegung des Werkzeugs aus der Arbeitsstellung in die Sicherheitsstellung.

Wie eingangs bereits erwähnt wurde, wird Schutz für eine Werkzeugmaschine, insbesondere Formatkreissäge, mit einem wie zuvor beschriebenen Sicherheitssystem begehrt.

Eine vorteilhafte Ausführung einer solchen Werkzeugmaschine kann sich ergeben, wenn die Werkzeugmaschine einen Tisch zur Abstützung eines Werkstücks aufweist und ein Werkzeug in einer Arbeitsstellung zumindest teilweise aus einem Innenbereich der Werkzeugmaschine über den Tisch vorsteht und in einer Sicherheitsstellung das Werkzeug im Wesentlichen vollständig unterhalb des Tisches in einem Innenbereich der Werkzeugmaschine angeordnet ist.

Dabei kann vorteilhaft sein, dass die Werkzeugmaschine eine Verstelleinrichtung für die Position des Werkzeugs relativ zum Tisch in einer Arbeitsstellung des Werkzeugs aufweist, wobei die Verstelleinrichtung vorzugsweise zwischen dem zweiten magnetischen Mittel und dem Rahmen angeordnet ist. Bei einer Ausführung der Werkzeugmaschine in Form einer Formatkreissäge kann sich durch die Verstelleinrichtung beispielsweise die Schnitttiefe des Sägeblatts der Kreissäge einstellen lassen.

Es kann dabei weiter vorteilhaft sein, dass die Werkzeugmaschine einen Endlagendämpfer zur Dämpfung der Bewegung des Werkzeugs bei Erreichen der Sicherheitsstellung aufweist.

Wie eingangs erwähnt wird auch Schutz für ein Verfahren zum Betrieb einer Werkzeugmaschine begehrt.

Ein solches Verfahren zum Betrieb einer wie zuvor beschriebenen Werkzeugmaschine mit einem bewegbaren Werkzeug, einer Detektionsvorrichtung zum Erkennen einer Verletzungsgefahr für einen Benutzer durch das Werkzeug und einem insbesondere wie zuvor beschriebenen Sicherheitssystem umfasst zumindest folgende Schritte:
- Betreiben der Werkzeugmaschine mit dem Werkzeug in einer Arbeitsstellung,
- Erkennen einer Verletzungsgefahr für einen Benutzer durch das Werkzeug mittels der Detektionsvorrichtung
- Bewegen des Werkzeugs in eine Sicherheitsstellung mittels der Bewegungsvorrichtung des Sicherheitssystems, wobei die Bewegung mittels magnetischer Kraft ausgelöst und/oder zumindest teilweise durchgeführt wird.

Dabei kann vorteilhaft sein, dass die Werkzeugmaschine weiter eine Verstelleinrichtung für die Position des Werkzeugs relativ zu einem Tisch der Werkzeugmaschine in einer Arbeitsstellung des Werkzeugs aufweist, wobei in einem weiteren Verfahrensschritt das Werkzeug mittels der Verstelleinrichtung aus der Sicherheitsstellung in die Arbeitsstellung zurück bewegt wird. So kann nach einer erfolgten Bewegung des Werkzeugs aus der Arbeitsstellung in die Sicherheitsstellung eine Rückführung des Werkzeugs in die Arbeitsstellung erfolgen.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1a: eine schematische Darstellung einer ersten Ausführung einer Werkzeugmaschine mit einem Werkzeug in einer Arbeitsstellung,
- Fig. 1b: eine schematische Darstellung einer ersten Ausführung einer Werkzeugmaschine mit einem Werkzeug in einer Sicherheitsstellung,
- Fig. 2a: eine schematische Darstellung einer zweiten Ausführung einer Werkzeugmaschine in einer Arbeitsstellung,
- Fig. 2b: eine schematische Darstellung einer zweiten Ausführung einer Werkzeugmaschine in einer Sicherheitsstellung,
- Fig. 3: eine schematische Schnittdarstellung von magnetischen Mitteln,
- Fig. 4: eine weitere schematische Schnittdarstellung von magnetischen Mitteln,
- Fig. 5: eine schematische Schnittdarstellung von stromlos aneinander gehaltenen magnetischen Mitteln,
- Fig. 6: eine schematische Schnittdarstellung von bestromten und einander abstoßenden magnetischen Mitteln,
- Fig. 7: eine schematische Schnittdarstellung einer weiteren Ausführung von magnetischen Mitteln, und
- Fig. 8: eine schematische Darstellung einer dritten Ausführung einer Werkzeugmaschine mit einem Werkzeug in einer Sicherheitsstellung.

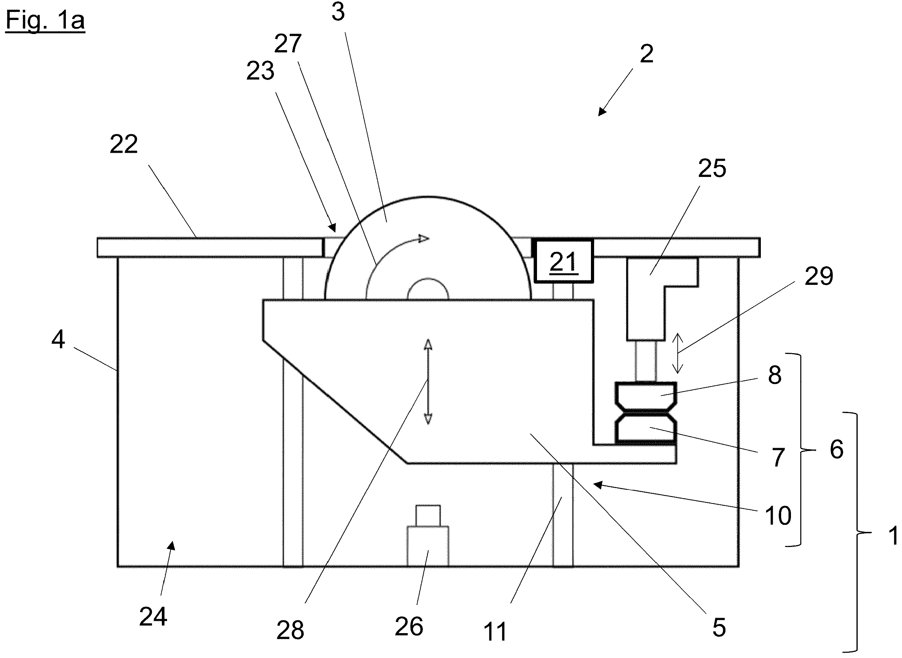

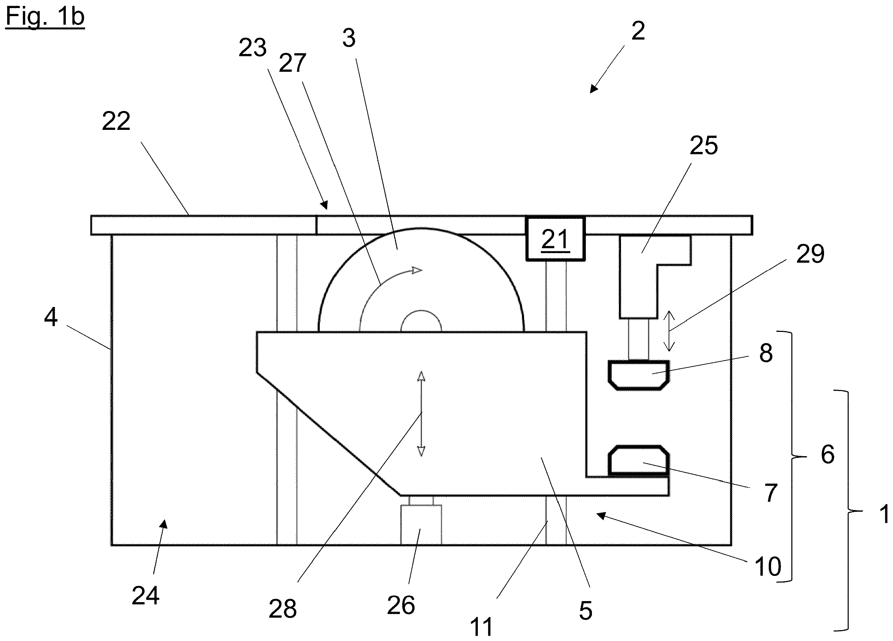

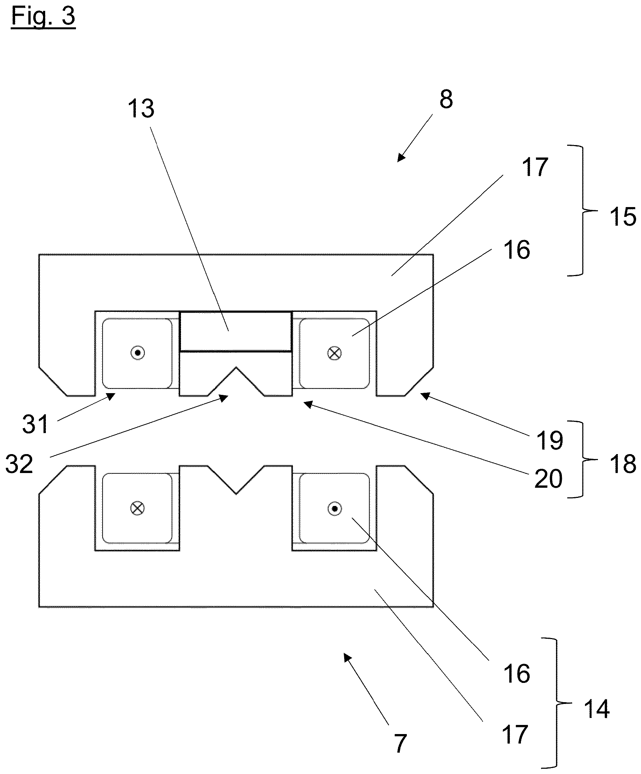

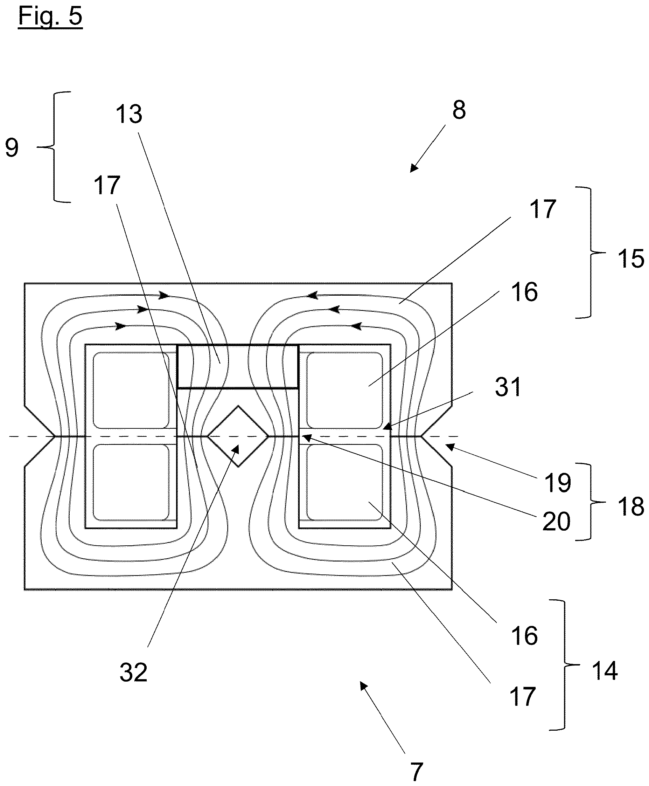

Die schematische Darstellung der Figur 1 zeigt eine als Kreissäge bzw. Formatkreissäge ausgebildete erste Ausführung einer Werkzeugmaschine 2 mit einem Sicherheitssystem 1. Die Werkzeugmaschine 2 weist einen Rahmen 4 und Tisch 22 zur Ablage bzw. Führung eines zu bearbeitenden Werkstücks (nicht dargestellt) auf. Aus einer im Tisch 22 ausgebildeten Öffnung 23 steht teilweise ein als Kreissägeblatt ausgeführtes Werkzeug 3 aus dem Innenbereich 24 der Werkzeugmaschine 2 über die Oberkante des Tisches 22 hervor. Das Werkzeug 3 der Werkzeugmaschine 2 befindet sich in der in Figur 1a gezeigten Ausführung in einer Arbeitsstellung. Das Werkzeug 3, dessen bei Betrieb der Werkzeugmaschine 2 vorgesehene Rotationrichtung 27 durch einen gekrümmten Pfeil angedeutet ist, ist an einer Aufspannvorrichtung 5 montiert. Die Aufspannvorrichtung 5 kann beispielsweise Teil eines einen Antrieb aufweisenden Sägeaggregats sein. Die Aufspannvorrichtung 5 ist linear verschiebbar an einer in dieser Ausführung als Linearführung 11 ausgebildeten Führung 10 gelagert. Die durch die Linearführung 11 erlaubte Bewegungsrichtung 28 der Aufspannvorrichtung 5 samt dem Werkzeug 3 ist durch einen senkrechten Pfeil angedeutet. Dadurch, dass ein an der Aufspannvorrichtung 5 angeordnetes erstes magnetisches Mittel 7 mit einem zweiten magnetischen Mittel 8, welches wie in den Figuren 3, 4 und 5 gezeigt einen Permanentmagnet 13 aufweisen kann und welches über eine Verstelleinrichtung 25 am Rahmen 4 angeordnet ist, zusammenwirkt, wird das Werkzeug 3 in der Arbeitsstellung gehalten (siehe dazu beispielsweise Figur 5). Durch die Verstelleinrichtung 25 kann die Position der Aufspannvorrichtung 5 und somit des Werkzeugs 3 relativ zum Tisch 22 verändert werden. Die Verstellrichtung 29 der Verstelleinrichtung 25 ist durch einen senkrechten Pfeil angedeutet. In der gezeigten Ausführung bilden das erste magnetische Mittel 7, das erste magnetische Mittel 8 und die als Linearführung 11 ausgebildete Führung 10 eine Bewegungsvorrichtung 6 aus, mittels welcher das Werkzeug 3 geführt aus einer Arbeitsstellung in eine Sicherheitsstellung (siehe Figur 1b) bewegt werden kann.

Die Werkzeugmaschine 2 weist weiter eine Detektionsvorrichtung 21 auf, mittels welcher eine Gefahrensituation für einen Benutzer - wie etwa ein ungewollter Eingriff des Benutzers in das Werkzeug 3 - erkannt werden kann. Wird bei Betrieb der Werkzeugmaschine 2 eine solche Gefahrensituation mittels der Detektionsvorrichtung 21 erkannt, kann das Werkzeug 3 mittels der Bewegungsvorrichtung 6 aus der Arbeitsstellung in die Sicherheitsstellung bewegt werden, wobei die Bewegung durch die magnetischen Mittel 7, 8 ausgelöst und/oder durchgeführt werden kann. Die Auslösung oder Durchführung der Bewegung kann beispielsweise durch Abschalten einer zwischen den magnetischen Mitteln 7, 8 wirkenden, anziehenden Kraft erfolgen. Dabei kann sich beispielsweise das Werkzeug 3 bzw. die Aufspannvorrichtung 5 durch die Führung 10 geführt mittels Gravitationskraft von der Arbeitsstellung in die Sicherheitsstellung bewegen. Es ist jedoch auch möglich, dass die Auslösung oder Durchführung der Bewegung durch Einschalten einer zwischen den magnetischen Mitteln 7, 8 wirkenden, abstoßenden Kraft erfolgt. Dabei kann die Bewegung durch eine initial wirkende magnetische Kraft zwischen den magnetischen Mitteln 7, 8 ausgelöst werden und gegebenenfalls auch über die Dauer der Bewegung weiter durch eine zwischen den magnetischen Mitteln 7, 8 magnetische Kraft durchgeführt werden.

In der schematischen Darstellung der Figur 1b befindet sich das Werkzeug 3 der Werkzeugmaschine 2 in einer Sicherheitsstellung, wobei das Werkzeug 3 wie dargestellt in der Sicherheitsstellung im Wesentlichen vollständig im Innenbereich 24 der Werkzeugmaschine 2 angeordnet ist. Das Werkzeug 3 hat sich dabei samt der Aufspannvorrichtung 5 und dem daran angeordneten ersten magnetischen Mittel 7 entlang der Linearführung 11 aus der Arbeitsstellung heraus in die Sicherheitsstellung bewegt, wobei bei einem Erreichen der Sicherheitsstellung die Bewegung der Aufspannvorrichtung 5 durch den Endlagendämpfer 26 gebremst wurde. Für einen Benutzer besteht also im Wesentlichen keine unmittelbare Möglichkeit mehr, in das Werkzeug 3 einzugreifen. Nach einer erfolgten Bewegung des Werkzeugs 3 aus der Arbeitsstellung in die Sicherheitsstellung kann eine Rückführung des Werkzeugs 3 in die Arbeitsstellung durch die Verstelleinrichtung 25 erfolgen. Dabei kann das an der Verstelleinrichtung 25 angeordnete zweite magnetische Mittel 8 zum an der sich nunmehr in der Sicherheitsstellung befindenden Aufspannvorrichtung 5 angeordneten ersten magnetischen Mittel 7 bewegt werden, an dieses ankoppeln und folglich die Aufspannvorrichtung 5 samt dem Werkzeug 3 mittels der Verstelleinrichtung 25 wieder in eine Arbeitsstellung des Werkzeugs 3 gebracht werden.

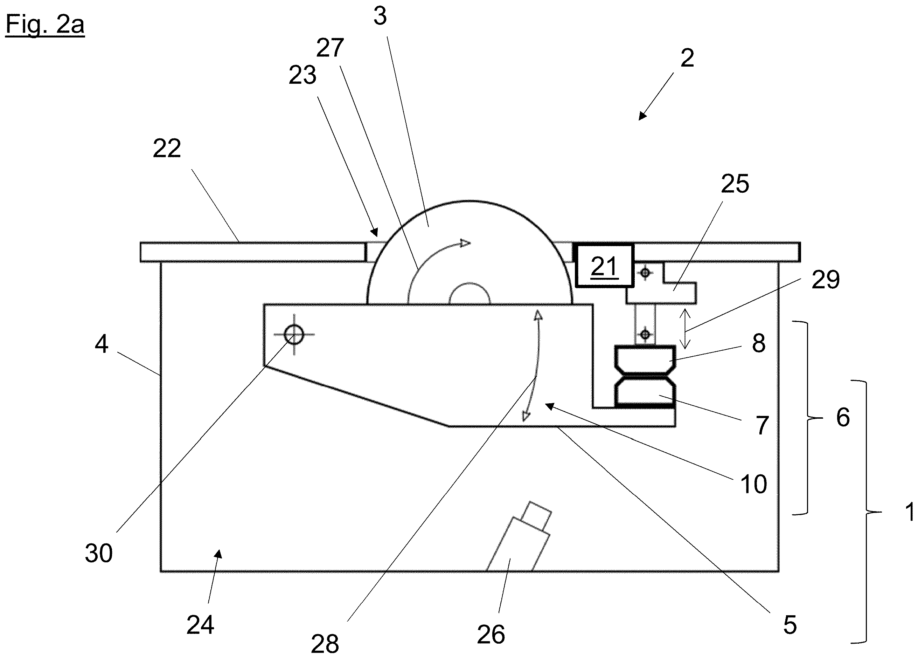

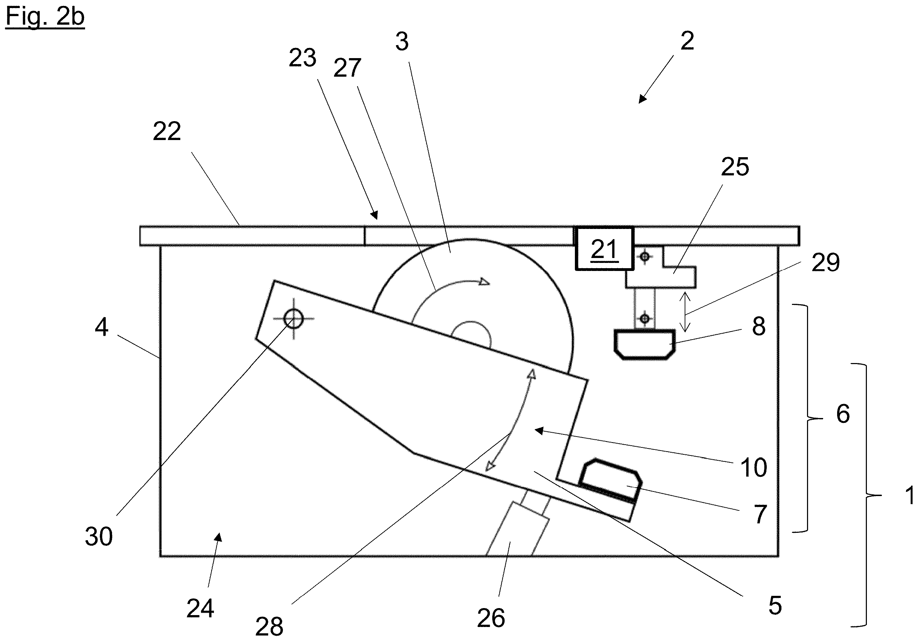

Die schematische Darstellung der Figur 2a zeigt eine wieder als Kreissäge bzw. Formatkreissäge ausgebildete zweite Ausführung einer Werkzeugmaschine 2 mit einem Sicherheitssystem 1. Strukturell und in ihrer Funktion ähnliche Komponenten sind mit denselben Bezugszeichen versehen, wie in der Ausführung der Figur 1a und 1b. Das Werkzeug 3 der Werkzeugmaschine 2 befindet sich in der in Figur 2a gezeigten Ausführung in einer Arbeitsstellung. Die Aufspannvorrichtung 5 ist im Gegensatz zur Ausführung der Figur 1a und 1b über eine ein Schwenklager 30 aufweisende Führung 10 schwenkbar am Rahmen 4 der Werkzeugmaschine 2 gelagert. Die durch das Schwenklager 30 erlaubte Bewegungsrichtung 28 der Schwenkbewegung der Aufspannvorrichtung 5 samt dem Werkzeug 3 ist durch einen gekrümmten Pfeil angedeutet. Das erste magnetische Mittel 7, das zweite magnetische Mittel 8 und die das Schwenklager 30 aufweisende Führung 10 bilden eine Bewegungsvorrichtung 6 aus, mittels welcher das Werkzeug 3 geführt aus einer Arbeitsstellung in eine Sicherheitsstellung (siehe Figur 2b) bewegt werden kann.

In der schematischen Darstellung der Figur 2b befindet sich das Werkzeug 3 der Werkzeugmaschine 2 wieder in einer Sicherheitsstellung, wobei das Werkzeug 3 wie dargestellt in der Sicherheitsstellung wieder im Wesentlichen vollständig im Innenbereich 24 der Werkzeugmaschine 2 angeordnet ist. Das Werkzeug 3 wurde dabei samt der Aufspannvorrichtung 5 und dem daran angeordneten ersten magnetischen Mittel 7 um das Schwenklager 30 aus der Arbeitsstellung heraus in die Sicherheitsstellung geschwenkt, wobei bei einem Erreichen der Sicherheitsstellung die Bewegung der Aufspannvorrichtung 5 wieder durch den Endlagendämpfer 26 gebremst wurde. Für einen Benutzer besteht also im Wesentlichen keine unmittelbare Möglichkeit, in das Werkzeug 3 einzugreifen.

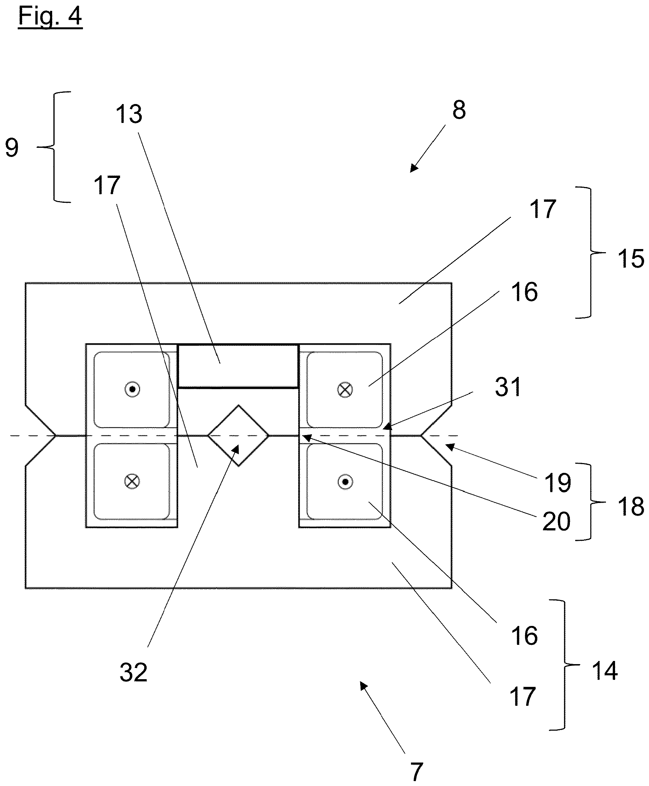

Figur 3 und Figur 4 zeigen jeweils eine schematische Schnittdarstellung einer besonders bevorzugten Ausführung der magnetischen Mittel 7, 8 gezeigt. In der gezeigten Ausführung sind die magnetischen Mittel 7, 8 zunächst jeweils als ein Elektromagnet 14, 15 ausgebildet. Jeder der Elektromagnete 14, 15 weist eine Spule 16 mit einem Kern 17 auf, wobei die Spule 16 im Wesentlichen vollständig in den Kern 17 eingebettet ist. Das Material des Kerns 17 ist jeweils vorteilhafter Weise aus einem magnetischen Stoff, speziell einem ferromagnetischen Stoff wie beispielsweise Eisen, ausgebildet. Wie dargestellt sind die zwei magnetischen Mittel 7, 8 einander gegenüberliegend und koaxial zueinander angeordnet.

Wie den Darstellungen der Figuren 3 und 4 zu entnehmen ist, ist der Kern 17 jeweils im Wesentlichen in Form eines Zylinders oder auch Prismas bzw. Quaders mit einer Mantelfläche und zwei Stirnflächen ausgebildet. Der Kern 17 ist jeweils im Wesentlichen konzentrisch zur Spule 16 angeordnet ist. Zur Führung - speziell zur Bündelung - des magnetischen Flusses weist jeweils eine der Stirnflächen des Kerns 17 in einem Randbereich Mittel 18 zur Führung des magnetischen Flusses auf, die in der gezeigten Ausführung in Form von zwei im Wesentlichen ringförmigen oder balkenförmigen Fortsätzen 19, 20 ausgebildet sind. Die im Wesentlichen ringförmigen oder balkenförmigen Fortsätze 19, 20 weisen jeweils einen im Wesentlichen trapezförmigen Querschnitt auf. Die Mittel 18 zur Führung des magnetischen Flusses sind, in anderen Worten gesagt, im Wesentlichen in Form einer von der Grundform des Kerns 17 axial abstehenden, stegförmigen Struktur ausgebildet.

In Figur 4 sind die magnetischen Mittel 7, 8 in einer Stellung gezeigt, in welcher diese miteinander an den im Wesentlichen ringförmigen oder balkenförmigen Fortsätzen 19, 20 zur Anlage gekommen sind. Eine solche Stellung der magnetischen Mittel 7, 8 zueinander kann beispielsweise in einer Arbeitsstellung des Werkzeugs 3 (siehe Figur 1a und Figur 2a) vorliegen. Dabei ist der Figur 4 deutlich zu entnehmen, dass durch die im Wesentlichen ringförmigen oder balkenförmigen Fortsätze 19, 20 zwischen den Kernen 17 der als Elektromagnete 14, 15 ausgebildeten magnetischen Mittel 7, 8 ein Luftspalt in Form jeweils einer ringförmigen bzw. balkenförmigen, axialen Ausnehmung 31 und einer zentralen Ausnehmung 32 besteht. In einem stromdurchflossenen Zustand der Spulen 16 wird die Flussdichte des magnetischen Flusses daher gebündelt bzw. konzentriert durch die im Wesentlichen ringförmigen oder balkenförmigen Fortsätze 19, 20 verlaufen und die zwischen den magnetischen Mitteln 7, 8 wirkende Kraft somit aufgrund des verdichteten Flusses deutlich verstärkt werden.

Wie dargestellt kann eines der magnetischen Mittel 8 zusätzlich einen Permanentmagnet 13 umfassen. Durch den Permanentmagnet 13 des zweiten magnetischen Mittels 8 kann durch ein Zusammenwirken mit dem Kern 17 des ersten magnetischen Mittels 7 eine Haltevorrichtung 9 ausgebildet werden. Durch eine solche Haltevorrichtung 9 kann das Werkzeug 3 auch in einem stromlosen Zustand der Elektromagnete 14, 15 in der Arbeitsstellung gehalten werden.

Eine besonders vorteilhafte Ausführung der Bewegungsvorrichtung 6 kann sich beispielsweise zunächst dadurch ergeben, dass die Haltekraft, durch welche das Werkzeug 3 in einer Arbeitsstellung gehalten wird, durch einen Permanentmagnet 13 aufgebracht wird. Der Permanentmagnet 13 kann wie in den Figuren 3 und 4 dargestellt im Kern 17 des als Elektromagnet 15 ausgebildeten zweiten magnetischen Mittels 8 angeordnet sein. Vorteilhafter Weise ist das zweite magnetische Mittel 8 über dem ersten magnetischen Mittel 7 angeordnet. Bei einer Ausbildung der magnetischen Mittel 7, 8 als Elektromagnete 14, 15 kann dadurch die Aufspannvorrichtung 5 für das Werkzeug 3 auch in einem unbestromten Zustand der Elektromagnete 14, 15 in der Arbeitsstellung gehalten werden. Vorteilhafter Weise können die Spulen 16 der Elektromagnete 14, 15 eine gegensätzlich orientierte Windungsrichtung aufweisen. Durch eine Serien- bzw. Reihenschaltung der Spulen 16 kann sich eine zeitgleiche Aktivierung oder auch Deaktivierung der magnetischen Mittel 7, 8 einfach ermöglichen lassen. Durch eine in Montagelage der magnetischen Mittel 7, 8 in der Bewegungsvorrichtung 6 gegensätzlich orientierte Windungsrichtung der zwei Spulen 16 der Elektromagnete 14, 15 kann eine abstoßende Kraft zwischen den zwei magnetischen Mitteln 7, 8 bei einer Reihenschaltung der Spulen ermöglicht werden. Da bei einer solchen Anordnung beispielsweise der magnetische Fluss aus dem Kern 17 des Elektromagneten 14 kaum in den Kern 17 des anderen Elektromagneten 15 eintritt (gleichzeitiger Aufbau des Flusses, entgegengesetzte Flussrichtungen), kann der magnetische Fluss eines jeden einzelnen Elektromagneten 14, 15 sehr schnell aufgebaut werden, wodurch sich vorteilhaft niedrige Reaktionszeiten (schnelle Auslösung) der Bewegungsvorrichtung 6 ermöglichen lassen. Auch kann durch die zuvor genannte Anordnung des Permanentmagneten 13 der von diesem bewirkte, zuvor dem Aufbringen der Haltekraft dienende, magnetische Fluss zur Abstoßung der magnetischen Mittel 7, 8 beitragen.

In Figur 5 eine schematische Schnittdarstellung von stromlos aneinander gehaltenen magnetischen Mitteln 7, 8 gezeigt. Das zweite magnetische Mittel 8 weist dabei wie dargestellt zusätzlich einen Permanentmagnet 13 auf. Durch den Permanentmagnet 13 des zweiten magnetischen Mittels 8 kann durch ein Zusammenwirken mit dem Kern 17 des ersten magnetischen Mittels 7 eine Haltevorrichtung 9 ausgebildet werden. In Figur 5 ist das Zusammenwirken durch die Feldlinien des durch den Permanentmagneten 13 induzierten magnetischen Flusses durch den Kern 17 des zweiten magnetischen Mittels 8 und den Kern 17 des ersten magnetischen Mittels 7 visualisiert. Dabei ist auch durch die Verdichtung der Feldlinien visualisiert, wie der magnetische Fluss durch die Mittel 18 zur Führung des magnetischen Flusses (Fortsätze 19, 20) konzentriert wird. Durch die magnetische Anziehungskraft des Permanentmagneten 13 können die magnetischen Mittel 7, 8 stromlos aneinander gehalten werden.

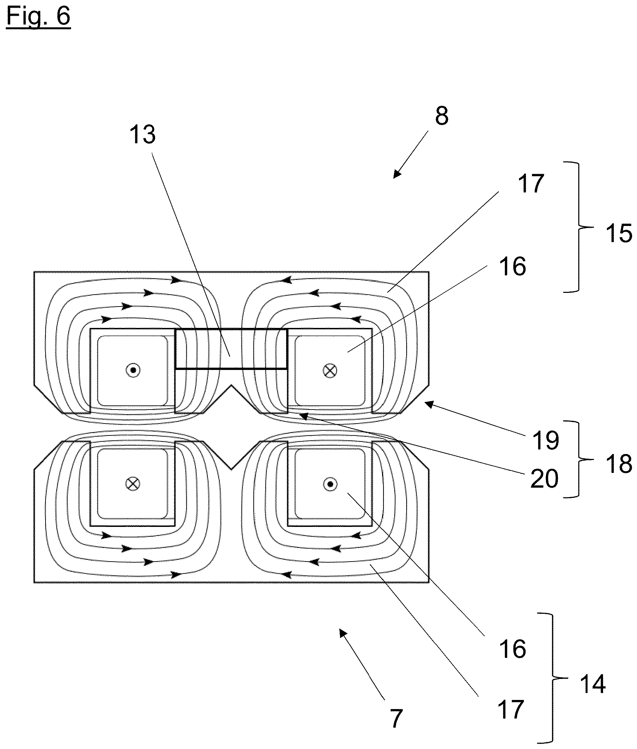

In Figur 6 ist eine schematische Schnittdarstellung von bestromten und einander abstoßenden magnetischen Mitteln 7, 8 gezeigt. Die sich jeweilig ergebenden Stromrichtungen des Stromflusses durch die Spulen 16 der Elektromagnete 14, 15 sind dabei einander entgegengesetzt orientiert, sodass sich die magnetischen Flüsse, wiederum durch Feldlinien angedeutet, der Elektromagnete 14, 15 entgegen stehen und sich eine die Elektromagnete 14, 15 relativ zueinander abstoßende Kraftwirkung einstellt. Der Permanentmagnet 13 kann dabei den magnetischen Fluss durch den Kern 17 des Elektromagnet 15 unterstützen. Es kann vorteilhaft sein, wenn der Permanentmagnet 13 im mit dem Rahmen 4 der Werkzeugmaschine 3 verbundenen zweiten magnetischen Mittel 8 angeordnet ist, da dieses geringeren Beschleunigungskräften ausgesetzt ist. In Figur 6 ist wiederum durch die Verdichtung der Feldlinien visualisiert, wie der magnetische Fluss durch die Mittel 18 zur Führung des magnetischen Flusses (Fortsätze 19, 20) konzentriert wird.

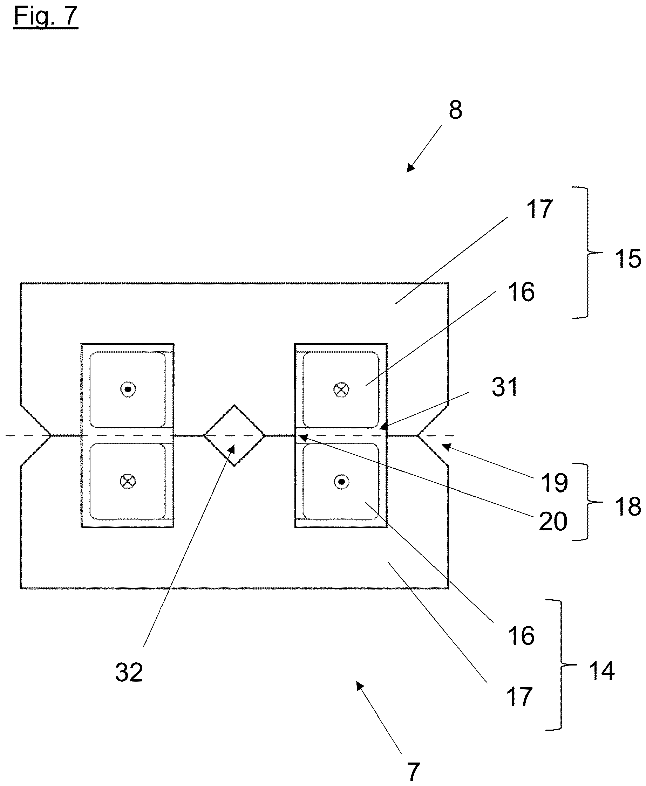

In Figur 7 ist eine schematische Schnittdarstellung einer weiteren Ausführung von magnetischen Mitteln 7, 8 gezeigt. Bei dieser Ausführung ist vorgesehen, dass das zweite magnetische Mittel 8, speziell der Kern 17, aus einem halbharten magnetischen Material besteht. Das erste magnetische Mittel 7, speziell der Kern 17, kann ebenfalls aus einem halbhartem magnetischen Material gefertigt sein oder aus einem magnetisch weichen Material gefertigt sein. Durch eine zumindest vorübergehende Bestromung einer der Spulen 16 kann das halbharte magnetische Material eine Remanenz-Magnetisierung aufweisen, wodurch die so ausgebildeten magnetischen Mittel 7, 8 auch im stromlosen Zustand der Spulen 16 durch eine magnetische Kraft aneinandergehalten werden können.

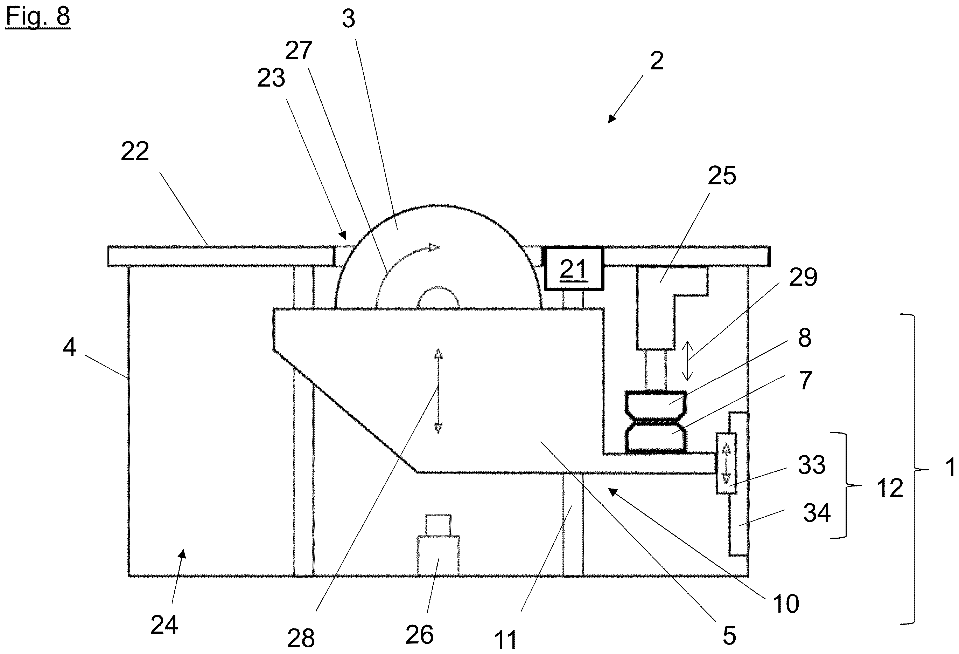

In Figur 8 ist eine schematische Darstellung einer dritten Ausführung einer Werkzeugmaschine 2 mit einem Werkzeug 3 in einer Sicherheitsstellung gezeigt, wobei in dieser Ausführung die Sicherheitseinrichtung 1 zusätzlich zu den magnetischen Mitteln 7, 8 einen Linearantrieb 12 mit einem linear zu einem Stator 34 verschiebbaren Läufer 33 aufweist. Eine solche Anordnung eines Läufers 33 zu einem Stator 34 ist im Stand der Technik beispielsweise aus Linearmotoren oder von Magnetschwebebahnen bekannt und kann entsprechend elektrisch ausgebildet sein. Der Linearantrieb 12 kann beispielsweise - bei entsprechender Ausbildung - die die Bewegung des Werkzeugs 3 durch die Bewegungsvorrichtung 6 aus der Arbeitsstellung in die Sicherheitsstellung mittels magnetischer Kraft auslösen und/oder zumindest teilweise durchführen bzw. unterstützen. Im gezeichneten Zustand kann der Linearantrieb 12 beispielsweise die Bewegungsvorrichtung 6 zusätzlich zur Schwerkraft vorspannen, um die Beschleunigung im Auslösefall zu erhöhen. In der Nähe der Endlage kann der Linearantrieb 12 zudem bremsend wirken und somit die Bewegung vor dem Endanschlag bremsen. Es soll grundsätzlich nicht ausgeschlossen sein, dass der Linearantrieb 12 elektrisch, pneumatisch oder hydraulisch ausgeführt ist. Auch der Einsatz eines nicht dargestellten Federelements, beispielsweise zur weiteren Erhöhung der Vorspannung, ist denkbar. Die in Figur 8 gezeigte Ausführung der Sicherheitseinrichtung 1 weist eine Führung 10 in Form einer Linearführung 11 auf, eine Ausführung der Führung 10 in Form eines Schwenklagers 30 ist jedoch ebenso denkbar.

### Bezugszeichenliste:

- 1: Sicherheitssystem
- 2: Werkzeugmaschine
- 3: Werkzeug
- 4: Rahmen
- 5: Aufspannvorrichtung
- 6: Bewegungsvorrichtung
- 7: erstes magnetisches Mittel
- 8: zweites magnetisches Mittel
- 9: Haltevorrichtung
- 10: Führung
- 11: Linearführung
- 12: Linearantrieb
- 13: Permanentmagnet
- 14: Elektromagnet
- 15: Elektromagnet
- 16: Spule
- 17: Kern
- 18: Mittel zur Führung des magnetischen Flusses
- 19: Fortsatz
- 20: Fortsatz
- 21: Detektionsvorrichtung
- 22: Tisch
- 23: Öffnung
- 24: Innenbereich
- 25: Verstelleinrichtung
- 26: Endlagendämpfer
- 27: Rotationsrichtung
- 28: Bewegungsrichtung
- 29: Verstellrichtung
- 30: Schwenklager
- 31: axiale Ausnehmung
- 32: zentrale Ausnehmung
- 33: Läufer
- 34: Stator

## Patentansprüche

1. Werkzeugmaschine (2), insbesondere Formatkreissäge, mit einem Sicherheitssystem (1) und mit einem Werkzeug (3), einer an einem Rahmen (4) der Werkzeugmaschine (2) bewegbar angeordneten Aufspannvorrichtung (5) für das Werkzeug (3), wobei die Aufspannvorrichtung (5) durch eine Bewegungsvorrichtung (6) aus einer Arbeitsstellung, in welcher das Werkzeug (3) zum Arbeiten verwendbar ist und für einen Benutzer eine Verletzungsgefahr durch das Werkzeug (3) besteht, in eine Sicherheitsstellung bewegbar ist, in welcher für den Benutzer im Wesentlichen keine Verletzungsgefahr durch das Werkzeug (3) besteht, wobei die Bewegungsvorrichtung (6) zumindest zwei gleich oder entgegengesetzt magnetisierte und/oder magnetisierbare magnetische Mittel (7,8) aufweist, **dadurch gekennzeichnet, dass** von den magnetischen Mitteln (7,8) zumindest ein erstes magnetisches Mittel (7) mit dem Werkzeug (3) verbunden ist und zumindest ein zweites magnetisches Mittel (8) mit dem Rahmen (4) verbunden oder an diesem angeordnet ist, sodass die Bewegung des Werkzeugs (3) durch die Bewegungsvorrichtung (6) aus der Arbeitsstellung in die Sicherheitsstellung mittels einer zwischen den zumindest zwei magnetischen Mitteln (7,8) wirkenden magnetischen Kraft zur Bewegung des Werkzeugs (3) auslösbar und/oder zumindest teilweise durchführbar ist.

2. Werkzeugmaschine (2) nach Anspruch 1, wobei die Bewegungsvorrichtung (6) eine Haltevorrichtung (9) aufweist, durch welche das Werkzeug (3) durch eine Haltekraft in der Arbeitsstellung gehalten wird.

3. Werkzeugmaschine (2) nach dem vorangehenden Anspruch, wobei die Haltekraft zumindest teilweise über einen Formschluss und/oder zumindest teilweise über einen Kraftschluss und/oder zumindest teilweise von zumindest einem der magnetischen Mittel (13) aufgebracht wird.

4. Werkzeugmaschine (2) nach zumindest einem der beiden vorangehenden Ansprüche, wobei die Haltekraft zur Auslösung der Bewegung des Werkzeugs (3) durch die Bewegungsvorrichtung (6) aus der Arbeitsstellung in die Sicherheitsstellung mittels zumindest eines der magnetischen Mittel (7,8) magnetisch überwindbar ist.

5. Werkzeugmaschine (2) nach zumindest einem der vorangehenden Ansprüche, wobei die Bewegungsvorrichtung (6) eine Führung (10) zur Bewegung des Werkzeugs (3) durch die Bewegungsvorrichtung (6) aufweist, wobei die Führung (10) vorzugsweise in Form einer Linearführung (11) ausgebildet ist.

6. Werkzeugmaschine (2) nach zumindest einem der vorangehenden Ansprüche, wobei die magnetischen Mittel (7, 8, 13) zumindest einen Permanentmagnet (13) und/oder ein magnetisch halbhartes Material, welches vorzugsweise eine Remanenz-Magnetisierung aufweist, umfassen.

7. Werkzeugmaschine (2) nach zumindest einem der vorangehenden Ansprüche, wobei die magnetischen Mittel (7, 8) zumindest einen magnetisierbaren Stoff, vorzugsweise einen ferromagnetischen Stoff, umfassen.

8. Werkzeugmaschine (2) nach zumindest einem der vorangehenden Ansprüche, wobei die magnetischen Mittel zumindest einen Elektromagnet (14), vorzugsweise zumindest zwei Elektromagnete (14, 15), umfassen.

9. Werkzeugmaschine (2) nach dem vorangehenden Anspruch, wobei der zumindest eine Elektromagnet (14, 15) in Form einer Spule (16) mit einem magnetisierbaren Kern (17) ausgebildet ist.

10. Werkzeugmaschine (2) nach dem vorangehenden Anspruch, wobei die magnetischen Mittel (7, 8) zumindest zwei Elektromagnete (14, 15) umfassen, wobei die Spulen (16) der zumindest zwei Elektromagnete (14, 15) in Serie oder parallel geschaltet sind und vorzugsweise in Montagelage in der Bewegungsvorrichtung (6) eine gegensätzlich orientierte Windungsrichtung aufweisen.

11. Werkzeugmaschine (2) nach einem der beiden vorangehenden Ansprüche, wobei der Kern (17) im Wesentlichen in Form eines Zylinders, eines Prismas oder eines Quaders mit einer Mantelfläche und zwei Stirnflächen ausgebildet ist, im Wesentlichen konzentrisch zur Spule (16) angeordnet ist, zumindest eine der Stirnflächen des Kerns (17) in einem Randbereich Mittel (18) zur Führung des magnetischen Flusses aufweist, und vorzugsweise die Spule (16) zumindest teilweise im Kern (17) eingebettet ist.

12. Werkzeugmaschine (2) nach dem vorangehenden Anspruch, wobei die Mittel (18) zur Führung des magnetischen Flusses in Form von zumindest einem im Wesentlichen ringförmigen oder balkenförmigen Fortsatz (19, 20) an zumindest einer der Stirnflächen des Kerns (17) ausgebildet sind.

13. Werkzeugmaschine (2) nach dem vorangehenden Anspruch, wobei der zumindest eine im Wesentlichen ringförmige oder balkenförmige Fortsatz (19, 20) einen im wesentlichen trapezförmigen Querschnitt aufweist.

14. Werkzeugmaschine (2) nach zumindest einem der vorangehenden Ansprüche, wobei die zumindest zwei magnetischen Mittel (7, 8) einander gegenüberliegend, vorzugsweise koaxial einander gegenüberliegend, angeordnet sind.

15. Werkzeugmaschine (2) nach zumindest einem der vorangehenden Ansprüche, wobei das Sicherheitssystem (1) eine Detektionsvorrichtung (21) zur Erkennung einer Verletzungsgefahr für einen Benutzer durch das Werkzeug (3) aufweist.

16. Werkzeugmaschine (2) nach dem vorangehenden Anspruch, wobei die Auslösung und/oder Durchführung der Bewegung des Werkzeugs (3) durch die Bewegungsvorrichtung (6) in Abhängigkeit einer Erkennung einer Verletzungsgefahr für einen Benutzer durch das Werkzeug (3) erfolgt.

17. Werkzeugmaschine (2) nach zumindest einem der vorangehenden Ansprüche, wobei die Werkzeugmaschine (2) einen Tisch (22) zur Abstützung eines Werkstücks aufweist und ein Werkzeug (3) in einer Arbeitsstellung zumindest teilweise aus einem Innenbereich der Werkzeugmaschine (2) über den Tisch (22) vorsteht und in einer Sicherheitsstellung das Werkzeug (3) im Wesentlichen vollständig unterhalb des Tisches in einem Innenbereich (24) der Werkzeugmaschine (2) angeordnet ist.

18. Werkzeugmaschine (2) nach dem vorangehenden Anspruch, wobei die Werkzeugmaschine (2) eine Verstelleinrichtung (25) für die Position des Werkzeugs (3) relativ zum Tisch in einer Arbeitsstellung des Werkzeugs (3) aufweist, wobei die Verstelleinrichtung (25) vorzugsweise zwischen dem zweiten magnetischen Mittel (8) und dem Rahmen (4) angeordnet ist.

19. Werkzeugmaschine (2) nach wenigstens einem der vorangehenden Ansprüche, wobei die Werkzeugmaschine (2) einen Endlagendämpfer (26) zur Dämpfung der Bewegung des Werkzeugs (3) bei Erreichen der Sicherheitsstellung aufweist.

20. Verfahren zum Betrieb einer Werkzeugmaschine (2) nach einem der Ansprüche 1 bis 19, mit einem bewegbaren Werkzeug (3), einer Detektionsvorrichtung (21) zum Erkennen einer Verletzungsgefahr für eine Benutzer durch das Werkzeug (3) und einem Sicherheitssystem (1), wobei das Verfahren zumindest folgende Schritte umfasst:
- Betreiben der Werkzeugmaschine (2) mit dem Werkzeug (3) in einer Arbeitsstellung,
- Erkennen einer Verletzungsgefahr für einen Benutzer durch das Werkzeug (3) mittels der Detektionsvorrichtung (21), und
- Bewegen des Werkzeugs (3) in eine Sicherheitsstellung mittels der Bewegungsvorrichtung (6) des Sicherheitssystems (1), wobei die Bewegung mittels magnetischer Kraft ausgelöst und/oder zumindest teilweise durchgeführt wird.

21. Verfahren zum Betrieb einer Werkzeugmaschine (2) nach dem vorangehenden Anspruch, wobei die Werkzeugmaschine (2) weiter eine Verstelleinrichtung (25) für die Position des Werkzeugs (3) relativ zu einem Tisch (22) der Werkzeugmaschine (2) in einer Arbeitsstellung des Werkzeugs (3) aufweist, wobei in einem weiteren Verfahrensschritt das Werkzeug (3) mittels der Verstelleinrichtung (25) aus der Sicherheitsstellung in die Arbeitsstellung zurück bewegt wird.

## Claims

1. Machine tool (2), in particular a panel saw, having a safety system (1) and a tool (3), a clamping device (5) arranged moveably on a frame (4) of the machine tool (2) for the tool (3), wherein the clamping device (5) is moveable by a motion device (6) from a working position in which the tool (3) can be used for working and entails a risk of injury to a user by the tool (3) into a safety position in which there is substantially no risk of injury to the user by the tool (3), wherein the motion device (6) has at least two equally or oppositely magnetized and/or magnetizable magnetic means (7, 8), **characterized in that** of the magnetic means (7, 8) at least a first magnetic means (7) is connected with the tool (3) and at least a second magnetic means (8) is connected with the frame (4) or arranged thereon so that the movement of the tool (3) by the motion device (6) out of the working position into the safety position can be triggered and/or at least partially implemented by means of a magnetic force acting between the at least two magnetic means (7, 8) for the movement of the tool (3).

2. Machine tool (2) as set forth in claim 1, wherein the motion device (6) has a holding device (9) by which the tool (3) is held in the working position by a holding force.

3. Machine tool (2) as set forth in the preceding claim, wherein the holding force is applied at least partially by way of the positively locking engagement and/or at least partially by a force-locking engagement and/or at least partially by at least one of the magnetic means (13).

4. Machine tool (2) as set forth in at least one of the two preceding claims, wherein the holding force can be magnetically overcome by means of at least one of the magnetic means (7, 8) for triggering the movement of the tool (3) by the motion device (6) out of the working position into the safety position.

5. Machine tool (2) as set forth in at least one of the preceding claims, wherein the motion device (6) has a guide (10) for the movement of the tool (3) by the motion device (6), the guide (10) preferably being in the form of a linear guide (11).

6. Machine tool (2) as set forth in at least one of the preceding claims, wherein the magnetic means (7, 8, 13) include at least one permanent magnet (13) and/or a magnetically semi-hard material which preferably has remanence magnetization.

7. Machine tool (2) as set forth in at least one of the preceding claims, wherein the magnetic means (7, 8) include at least one magnetizable substance, preferably a ferromagnetic substance.

8. Machine tool (2) as set forth in at least one of the preceding claims, wherein the magnetic means include at least one electromagnet (14), preferably at least two electromagnets (14, 15).

9. Machine tool (2) as set forth in the preceding claim, wherein the at least one electromagnet (14, 15) is in the form of a coil (16) having a magnetizable core (17).

10. Machine tool (2) as set forth in the preceding claim, wherein the magnetic means (7, 8) include at least two electromagnets (14, 15), wherein the coils (16) of the at least two electromagnets (14, 15) are connected in series or parallel and preferably in the assembled position in the motion device (6) are of an oppositely oriented winding direction.

11. Machine tool (2) as set forth in one of the two preceding claims, wherein the core (17) is substantially in the form of a cylinder, a prism or a cuboid having a peripheral surface and two end faces, is arranged substantially concentrically relative to the coil (16), at least one of the end faces of the core (17) in an end region has means (18) for guiding the magnetic flux and preferably the coil (16) is at least partially embedded in the core (17).

12. Machine tool (2) as set forth in the preceding claim, wherein the means (18) for guiding the magnetic flux are in the form of at least one substantially annular or bar-shaped extension (19, 20) at at least one of the end faces of the core (17).

13. Machine tool (2) as set forth in the preceding claim, wherein the at least one substantially annular or bar-shaped extension (19, 20) is of a substantially trapezoidal cross-section.

14. Machine tool (2) as set forth in at least one of the preceding claims, wherein the at least two magnetic means (7, 8) are arranged in mutually opposite relationship, preferably in mutually coaxially opposite relationship.

15. Machine tool (2) as set forth in at least one of the preceding claims, wherein the safety system (1) has a detection device (21) for detecting a risk of injury to a user by the tool (3).

16. Machine tool (2) as set forth in the preceding claim, wherein triggering and/or implementation of the movement of the tool (3) by the motion device (6) is effected in dependence on a detection of a risk of injury to a user by the tool (3).

17. Machine tool (2) as set forth in at least one of the preceding claims, wherein the machine tool (2) has a table (22) for supporting a workpiece and a tool (3) in a working position projects at least partially out of an inner region of the machine tool (2) above the table (22) and in a safety position the tool (3) is arranged substantially completely beneath the table in an inner region (24) of the machine tool (2).

18. Machine tool (2) as set forth in the preceding claim, wherein the machine tool (2) has a displacement device (25) for the position of the tool (3) relative to the table in a working position of the tool (3), wherein the displacement device (25) is preferably arranged between the second magnetic means (8) and the frame (4).

19. Machine tool (2) as set forth in at least one of the preceding claims, wherein the machine tool (2) has an end position damper (26) for damping the movement of the tool (3) upon reaching the safety position.

20. Method of operating a machine tool (2) as set forth in one of claims 1 through 19, having a moveable tool (3), a detection device (21) for detecting a risk of injury to a user by the tool (3) and a safety system (1), wherein the method includes at least the following steps:
- operating the machine tool (2) with the tool (3) in a working position,
- detecting a risk of injury to a user by the tool (3) by means of the detection device (21), and
- moving the tool (3) into a safety position by means of the motion device (6) of the safety system (1), wherein the movement is triggered and/or at least partially implemented by means of magnetic force.

21. Method of operating a machine tool (2) as set forth in the preceding claim, wherein the machine tool (2) further has a displacement device (25) for the position of the tool (3) relative to a table (22) of the machine tool (2) in a working position of the tool (3), wherein in a further step in the method the tool (3) is moved back from the safety position into the working position by means of the displacement device (25).

## Revendications

1. Machine-outil (2), en particulier scie circulaire de mise au format, avec un système de sécurité (1) et avec un outil (3), un dispositif de serrage (5) agencé de manière mobile au niveau d'un bâti (4) de la machine-outil (2) pour l'outil (3), dans laquelle le dispositif de serrage (5) est mobile par un dispositif de déplacement (6) d'une position de travail, dans laquelle l'outil (3) est utilisable pour le travail et il existe un risque de blessure par l'outil (3) pour un utilisateur, dans une position de sécurité, dans laquelle il n'existe sensiblement aucun risque de blessure par l'outil (3) pour l'utilisateur, dans laquelle le dispositif de déplacement (6) présente au moins deux moyens (7, 8) magnétiques magnétisés et/ou magnétisables de manière identique ou opposée, **caractérisé en ce que** parmi les moyens magnétiques (7, 8), au moins un premier moyen magnétique (7) est relié à l'outil (3) et au moins un second moyen magnétique (8) est relié au bâti (4) ou est agencé au niveau de celui-ci de sorte que le déplacement de l'outil (3) puisse être déclenché et/ou au moins partiellement réalisé par le dispositif de déplacement (6) de la position de travail dans la position de sécurité au moyen d'une force magnétique agissant entre les au moins deux moyens magnétiques (7, 8) pour le déplacement de l'outil (3).

2. Machine-outil (2) selon la revendication 1, dans laquelle le dispositif de déplacement (6) présente un dispositif de maintien (9), par lequel l'outil (3) est maintenu par une force de maintien dans la position de travail.

3. Machine-outil (2) selon la revendication précédente, dans laquelle la force de maintien est appliquée au moins partiellement par le biais d'une liaison à complémentarité de formes et/ou au moins partiellement par le biais d'une liaison à force et/ou au moins partiellement par au moins un des moyens magnétiques (13).

4. Machine-outil (2) selon au moins l'une quelconque des deux revendications précédentes, dans laquelle la force de maintien peut être surmontée magnétiquement pour le déclenchement du déplacement de l'outil (3) par le dispositif de déplacement (6) de la position de travail dans la position de sécurité au moyen d'au moins un des moyens magnétiques (7, 8).

5. Machine-outil (2) selon au moins l'une quelconque des deux revendications précédentes, dans laquelle le dispositif de déplacement (6) présente un guidage (10) pour le déplacement de l'outil (3) par le dispositif de déplacement (6), dans laquelle le guidage (10) est de préférence réalisé sous la forme d'un guidage linéaire (11).

6. Machine-outil (2) selon au moins l'une quelconque des deux revendications précédentes, dans laquelle les moyens magnétiques (7, 8, 13) comportent au moins un aimant permanent (13) et/ou un matériau semi-dur magnétiquement qui présente de préférence une magnétisation rémanente.

7. Machine-outil (2) selon au moins l'une quelconque des deux revendications précédentes, dans laquelle les moyens magnétiques (7, 8) comportent au moins une substance magnétisable, de préférence une substance ferromagnétique.

8. Machine-outil (2) selon au moins l'une quelconque des deux revendications précédentes, dans laquelle les moyens magnétiques comportent au moins un électroaimant (14), de préférence au moins deux électroaimants (14, 15).

9. Machine-outil (2) selon la revendication précédente, dans laquelle l'au moins un électroaimant (14, 15) est réalisé sous la forme d'une bobine (16) avec un noyau magnétisable (17).

10. Machine-outil (2) selon la revendication précédente, dans laquelle les moyens magnétiques (7, 8) comportent au moins deux électroaimants (14, 15), dans laquelle les bobines (16) des au moins deux électroaimants (14, 15) sont montées en série ou parallèle et de préférence en position de montage dans le dispositif de déplacement (6) présentent un sens d'enroulement orienté de manière opposée.

11. Machine-outil (2) selon l'une quelconque des deux revendications précédentes, dans laquelle le noyau (17) est réalisé sensiblement en forme de cylindre, prisme ou parallélépipède avec une surface enveloppe et deux surfaces avant, est agencé sensiblement concentriquement à la bobine (16), au moins une des surfaces avant du noyau (17) dans une zone de bord présente des moyens (18) pour le guidage du flux magnétique, et de préférence une bobine (16) est intégrée au moins partiellement dans le noyau (17).

12. Machine-outil (2) selon la revendication précédente, dans laquelle les moyens (18) pour le guidage du flux magnétique sont réalisés sous la forme d'au moins un prolongement (19, 20) sensiblement en forme d'anneau ou de barre au niveau d'au moins une des surfaces avant du noyau (17).

13. Machine-outil (2) selon la revendication précédente, dans laquelle l'au moins un prolongement (19, 20) sensiblement en forme d'anneau ou de barre présente une section transversale sensiblement trapézoïdale.

14. Machine-outil (2) selon au moins l'une quelconque des revendications précédentes, dans laquelle les au moins deux moyens magnétiques (7, 8) sont agencés à l'opposé l'un de l'autre, de préférence coaxialement à l'opposé l'un de l'autre.

15. Machine-outil (2) selon au moins l'une quelconque des revendications précédentes, dans laquelle le système de sécurité (1) présente un dispositif de détection (21) pour la reconnaissance d'un risque de blessure pour un utilisateur par l'outil (3).

16. Machine-outil (2) selon la revendication précédente, dans laquelle le déclenchement et/ou la réalisation du déplacement de l'outil (3) est effectuée par le dispositif de déplacement (6) en fonction d'une reconnaissance d'un risque de blessure pour un utilisateur par l'outil (3).

17. Machine-outil (2) selon au moins l'une quelconque des revendications précédentes, dans laquelle la machine-outil (2) présente une table (22) pour l'appui d'une pièce et un outil (3) dans une position de travail dépasse de la table (22) au moins partiellement d'une zone intérieure de la machine-outil (2) et dans une position de sécurité l'outil (3) est agencé sensiblement complètement en dessous de la table dans une zone intérieure (24) de la machine-outil (2).

18. Machine-outil (2) selon la revendication précédente, dans laquelle la machine-outil (2) présente un dispositif de réglage (25) pour la position de l'outil (3) par rapport à la table dans une position de travail de l'outil (3), dans laquelle le dispositif de réglage (25) est de préférence agencé entre le second moyen magnétique (8) et le bâti (4).

19. Machine-outil (2) selon au moins l'une quelconque des revendications précédentes, dans laquelle la machine-outil (2) présente un amortisseur de fin de course (26) pour l'amortissement du déplacement de l'outil (3) lors de l'atteinte de la position de sécurité.

20. Procédé de fonctionnement d'une machine-outil (2) selon l'une quelconque des revendications 1 à 19, avec un outil (3) mobile, un dispositif de détection (21) pour la reconnaissance d'un risque de blessure pour un utilisateur par l'outil (3) et un système de sécurité (1), dans lequel le procédé comporte au moins les étapes suivantes :
- le fonctionnement de la machine-outil (2) avec l'outil (3) dans une position de travail,
- la reconnaissance d'un risque de blessure pour un utilisateur par l'outil (3) au moyen du dispositif de détection (21), et
- le déplacement de l'outil (3) dans une position de sécurité au moyen du dispositif de déplacement (6) du système de sécurité (1), dans lequel le déplacement est déclenché et/ou est réalisé au moins partiellement au moyen de la force magnétique.

21. Procédé de fonctionnement d'une machine-outil (2) selon la revendication précédente, dans lequel la machine-outil (2) présente en outre un dispositif de réglage (25) pour la position de l'outil (3) par rapport à une table (22) de la machine-outil (2) dans une position de travail de l'outil (3), dans lequel dans une autre étape de procédé, l'outil (3) est redéplacé au moyen du dispositif de réglage (25) de la position de sécurité dans la position de travail.
